# EUROPEAN PATENT SPECIFICATION

(11) **EP 3 726 360 B1**
(45) Date of publication and mention of the grant of the patent: **01.11.2023**
(21) Application number: 18889928.0
(22) Date of filing: 11.12.2018
(51) Int. Cl.: G06F 3/0482, G06F 3/04883, G06F 3/0484, B60K 35/00, B60K 37/06

(54) **DEVICE AND METHOD FOR CONTROLLING VEHICLE COMPONENT**
VORRICHTUNG UND VERFAHREN ZUR STEUERUNG EINER FAHRZEUGKOMPONENTE
DISPOSITIF ET PROCÉDÉ DE COMMANDE DE PIÈCE DE VÉHICULE

(30) Priority: 15.12.2017 CN 201711346266
(43) Date of publication of application: 21.10.2020
(73) Proprietor: NIO (Anhui) Holding Co., Ltd., Hefei City, Anhui Province (CN)
(72) Inventor: DONG, Yiwei, Hong Kong (CN); LIU, Yuxiang, Hong Kong (CN)
(74) Representative: Hansson Thyresson AB
(86) International application number: PCT/CN2018/120214
(87) International publication number: WO 2019/114679

(56) References cited:
- EP-A1- 2 930 603
- WO-A1-2013/074897
- WO-A2-2004/008305
- CN-A- 104 281 406
- CN-A- 105 102 273
- CN-A- 107 117 114
- US-A1- 2011 166 748
- US-A1- 2017 355 382

## Description

### Technical Field

The invention falls within the technical field of control, and relates to an apparatus and method for controlling vehicle parts.

### Background Art

Many parts (e.g., windows, locks, lamps, seats, etc.) in a vehicle can be controlled and set by a user. Because there are many parts that need to be controlled, the vehicle is provided with many physical buttons for controlling various corresponding parts, which makes it relatively difficult for the user to memorize these physical buttons and/or be familiar with the operations thereof.

At present, in order to improve user experience, a control user interface is displayed on a display screen of an onboard terminal device (e.g., a console screen), and virtual keys on the control user interface are operated, so as to complete the control of vehicle parts, for example, closing of a window, unlocking, etc.

However, the control user interface on the existing onboard terminal device also has the problem with difficulty in memory cognition, which results in inability to quickly enter into interfaces of corresponding parts to complete setup operations, a long operation path and a low efficiency of user operations, and it is very unfriendly especially to a user who is performing a driving operation.

WO 2013/074897 A1 discloses methods and systems for a configurable vehicle console. Specifically, a configurable console comprises one or more displays that are capable of receiving input from a user. At least one of these displays is removed from the console of a vehicle and operated as a stand-alone computing platform. Moreover, each one or more of the displays of the console is configured to present a plurality of custom applications that, when manipulated by at least one user, are adapted to control functions associated with a vehicle and/or associated peripheral devices. Applications can be controlled via an application store from on board a vehicle.

EP 2 930 603 A1 refers to a method for providing a graphical user interface in a vehicle, which displays on a display surface of an indicator device, at least two display windows in an initial display state. The display windows display graphic objects, and the graphic objects for each display window are assigned to a category. A user's intention to use a first display window is also detected. When the intention to use has been detected, the first display window changes to a mode. A user action is recorded when the first display window is in operation mode. Finally, when the operation has been recorded, at least the first display window changes to a second display state.

US 2011/166748 A1 describes a vehicle human machine interface (HMI) for control by a vehicle occupant. The HMI may include a first graphical display, a second graphical display, a plurality of input controls, and a vehicle computer communicating with the first and second graphical displays. The vehicle computer is configured to receive user input defining user instructions for controlling one or more functions of the vehicle. In response to the input, the computer presents on the first and second graphical displays a vehicle function identifier color associated with the vehicle function.

### Summary of the Invention

One of the objectives of the invention is to improve a user's convenience in controlling vehicle parts; and
another objective of the invention is to improve the user's experience in controlling the vehicle parts.

To realize the objectives above or other objectives, the invention provides an apparatus and a method for controlling vehicle parts defined by the appended independent claims. Additional features and advantages of the concepts disclosed herein are set forth in the dependent claims.

According to a first aspect of the invention, an apparatus for controlling vehicle parts is provided, which comprises:
a display configured to provide a control user interface, wherein the control user interface displays a plurality of interactive elements for controlling various vehicle parts; and
a processor configured to control, in response to receiving an indication message indicative of entering into the control user interface, at least some of the plurality of interactive elements to be arranged and displayed by categories on the control user interface.

In the apparatus according to an embodiment of the invention, the processor is configured to control, in response to receiving an indication message indicative of entering into the control user interface, at least some of the plurality of interactive elements to be arranged and displayed by categories of physical attributes of their correspondingly controlled vehicle parts on the control user interface.

In the apparatus according to an embodiment of the invention, the processor is configured to control, in response to receiving an indication message indicative of entering into the control user interface, at least some of the plurality of interactive elements to be arranged and displayed by categories of effects of their correspondingly controlled vehicle parts on the control user interface.

In the apparatus according to an embodiment of the invention, the processor is further configured to define, in response to a category customization instruction from a user, categories that need to be displayed on the control user interface and display manners therefor.

In the apparatus according to an embodiment of the invention, the processor is further configured to define, according to frequencies of use of the interactive elements by the user, correspondingly arranged and displayed interactive elements in each category.

In the apparatus according to an embodiment of the invention, the processor is further configured to control, in response to an interactive operation instruction for a corresponding interactive element, the display to display a user setup interface for one or more vehicle parts correspondingly controlled by the interactive element.

In the apparatus according to an embodiment of the invention, the processor is further configured to control the display of a default user interface on the display, and control, in response to an indication message indicative of entering into the control user interface by means of a sliding operation on the default user interface, the display to switch the display of the control user interface.

According to a second aspect of the invention, a method for controlling vehicle parts is provided, which comprises:
receiving an indication message indicative of entering into a control user interface; and
displaying the control user interface in response to the indication message, wherein at least some of a plurality of interactive elements for controlling various vehicle parts on the control user interface are arranged and displayed by categories.

In the method according to an embodiment of the invention, in the step of displaying the control user interface, at least some of the plurality of interactive elements for controlling various vehicle parts on the control user interface are arranged and displayed by categories of physical attributes of their correspondingly controlled vehicle parts.

In the method according to an embodiment of the invention, in the step of displaying the control user interface, at least some of the plurality of interactive elements for controlling various vehicle parts on the control user interface are arranged and displayed by categories of effects of their correspondingly controlled vehicle parts.

The method according to an embodiment of the invention further comprises:
a definition step: defining, in response to a category customization instruction from a user, categories that need to be displayed on the control user interface and display manners therefor.

The method according to an embodiment of the invention further comprises:
a definition step: defining, according to frequencies of use of the interactive elements by the user, correspondingly arranged and displayed interactive elements in each category.

The method according to an embodiment of the invention further comprises the steps of:
receiving an interactive operation instruction for a corresponding interactive element; and
displaying, in response to the interactive operation instruction, a user setup interface for one or more vehicle parts correspondingly controlled by the interactive element.

The method according to an embodiment of the invention further comprises the steps of: displaying a default user interface;
receiving an indication message indicative of a sliding operation on the default user interface in said step of receiving an indication message indicative of entering into a control user interface; and
switching the display from the default user interface to the control user interface in said step of displaying the control user interface.

According to a third aspect of the invention, an onboard terminal device is provided, which comprises a memory, a processor, and a computer program stored on the memory and executable on the processor, wherein the program implements, when executed by the processor, the steps of any of the methods above.

According to a fourth aspect of the invention, a computer-readable storage medium is provided on which a computer program is stored, wherein the program is executed by a computer to implement the steps of any of the methods above

The foregoing features and operations of the invention will become more apparent from the following descriptions and the accompanying drawings.

### Brief Description of the Drawings

The above-mentioned and other objectives and advantages of the invention will be more thorough and clearer from the following detailed description in conjunction with the drawings, wherein the same or similar elements are represented by the same numerals.
Fig. 1 is a schematic structural diagram of an apparatus for controlling vehicle parts according to an embodiment of the invention.
Fig. 2 is a schematic diagram when an apparatus for controlling vehicle parts displays a control user interface, according to an embodiment of the invention.
Fig. 3 is a schematic diagram of a user setup interface according to an embodiment of the invention.
Fig. 4 is a flowchart of a method for controlling vehicle parts according to an embodiment of the invention.
Fig. 5 is a schematic diagram of modules in an apparatus for controlling vehicle parts according to another embodiment of the invention.

### Detailed Description of Embodiments

The invention will now be more completely described with reference to the accompanying drawings, in which exemplary embodiments of the invention are shown. However, the invention may be implemented in many different forms and should not be construed as limited to the embodiments set forth herein. On the contrary, these embodiments are provided to make the disclosure thorough and complete and fully convey the concept of the invention to those skilled in the art. In the accompanying drawings, the same numerals denote the same elements or components, and the description thereof will thus be omitted.

Some block diagrams shown in the accompanying drawings are functional entities that do not necessarily correspond to physically or logically independent entities. These functional entities may be implemented in the form of software, or implemented in one or more hardware modules or integrated circuits, or implemented in different networks and/or processor apparatuses and/or micro-controller apparatuses.

The invention is described below with reference to flowchart illustrations, block diagrams, and/or flowcharts of method and apparatus according to the embodiments of the invention. It should be understood that each block of the flowchart illustrations and/or the block diagrams and combinations of the flowchart illustrations and/or the block diagrams may be implemented by computer program instructions. These computer program instructions may be provided to a processor of a general-purpose computer, a special-purpose computer or other programmable data processing devices to form a machine, such that the instructions, which are executed by the processor of the computer or the other programmable data processing devices, create components for implementing functions/operations specified in the flowcharts and/or blocks and/or one or more flow block diagrams.

These computer program instructions may be stored in a computer-readable memory and may instruct a computer or other programmable processors to implement functions in a specific manner, so that these instructions stored in the computer-readable memory constitute an article of manufacture, which contains instruction components for implementing the functions/operations specified in one or more blocks of the flowcharts and/or block diagrams.

These computer program instructions may be loaded onto a computer or other programmable data processors to enable a series of operational steps to be executed on the computer or the other programmable processors, so as to constitute a computer-implemented process, so that these instructions executed on the computer or the other programmable data processors provide steps for implementing the functions or operations specified in one or more blocks of the flowcharts and/or block diagrams. It should also be noted that in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved.

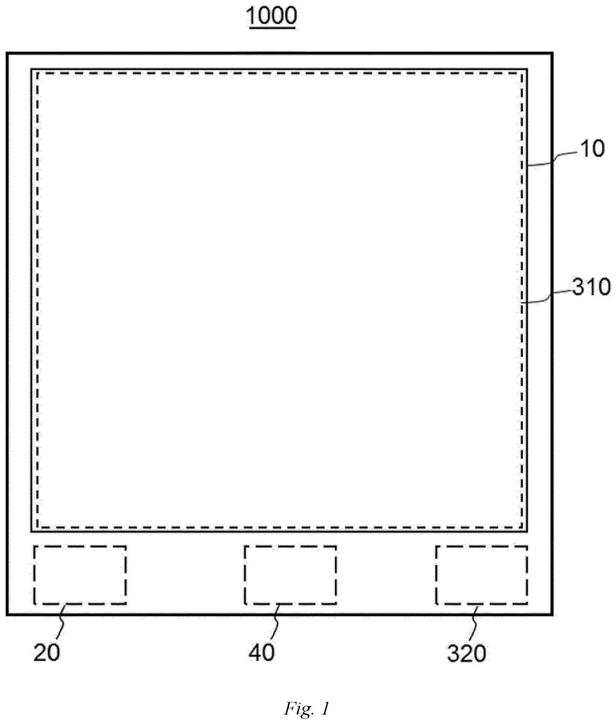

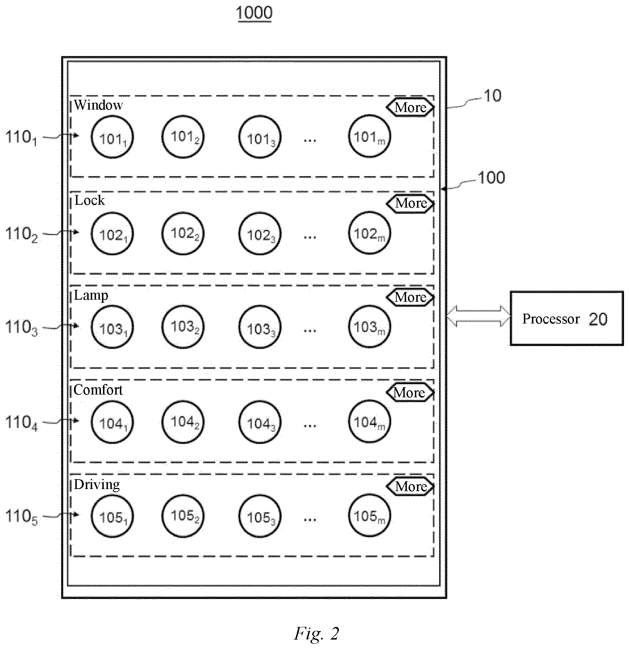

Fig. 1 shows a schematic structural diagram of an apparatus for controlling vehicle parts according to an embodiment of the invention; and Fig. 2 shows a schematic diagram when an apparatus for controlling vehicle parts displays a control user interface according to an embodiment of the invention. The apparatus for controlling vehicle parts may be specifically implemented by, for example, an onboard terminal device 1000 or a head unit 1000. The onboard terminal device 1000 may be mounted on a vehicle (such as an electric vehicle or other types of vehicles). For example, it may be specifically an onboard console apparatus, which is provided with a display 10 similar to a console screen to conveniently present information to, for example, a driver user.

The onboard terminal device 1000 or the head unit 1000 is illustratively an infotainment system in the vehicle in various examples of this application, may directly refer to a controller of the system in some cases, and may specifically refer to a display screen (if any) of the system in some other cases, which may be determined in combination with the context. It should be particularly pointed out that the infotainment system according to this application comprises various functions or combinations of video and audio playback, navigation, weather and mileage presentation, etc., and may also be referred to as an operating system of the vehicle in some cases.

In an embodiment, the onboard terminal device 1000 may comprise one or more displays 10, a processor 20, and a memory 40. The memory 40 may store program codes that may be read by the processor 20 and executed on the processor 20 to configure the onboard terminal device 1000 to perform operations defined by the program codes. For example, the processor 20 may be configured to perform a method for operating a user interface. The processor 20 may process program codes or related data that may also be stored in the memory 40, and may generate an output including a user interface (UI) to be rendered on the display 10. Each UI may include one or more interactive elements (not shown in Fig. 1) for implementing various functions.

In an embodiment, the onboard terminal device 1000 may further comprise one or more input sensors 112 and 114, wherein the input sensors 112 and 114 may be configured to provide the processor 20 with an input or instruction generated by a user. The processor 20 may analyze an indication message or instruction input by the user, so as to identify an interactive element of a user interface affected by the indication message or instruction and perform a function associated with the identified interactive element. For example, the processor 20 may execute a functional component or engine that defines the behavior of a user interface, and provide a user input to the functional component or engine of the user interface to identify an interactive element and perform a corresponding function.

Specifically, the input sensor 112 may be a touch sensor, which may be arranged on the display 10 or arranged integrally with the display 10. In an instance, the input sensor 112 can detect a direct contact of a user's finger or the like. Based on the position of the contact on the user interface 112 and a corresponding history of an interaction, for example, a gesture, the processor 20 may identify a corresponding interactive element related to the current position of the contact, and may perform a function associated with the identified interactive element, which may take the current position or history of the interaction into consideration. For example, the user may press an interface element and swipe or move the interactive element toward one direction. By removing the finger, the interaction can be completed and the interactive element may be placed on the final position. The interaction may trigger other functions defined by an associated interactive element, and a user interface or its processing component or engine.

The input sensor 114 may be, but is not limited to, an acoustic input sensor, such as a microphone, which may detect a speech command indicated by a required interactive element. For example, the user may identify the required interactive element with a tag or any other suitable identifier, and may also describe a required action to be performed that is related to the required interactive element. The processor 20 may identify the speech command, and submit, to the user interface or its processing component or engine, data for characterizing an interaction.

Although the onboard terminal device 1000 has been shown as comprising several components, including the display 10 and two input sensors 112 and 114, it should be understood that the onboard terminal device 1000 may further comprise other output devices of the same or other modes, such as a speaker or a vibrotactile feedback layer, or may comprise other input sensors, such as a keyboard, a camera, a depth sensor, an interface that can be connected to an external input device, etc.

In conjunction with Figs. 1 and 2, the display 10 is configured to provide a control UI 100, wherein the control UI 100 displays a plurality of interactive elements for controlling various vehicle parts. The number and type of the controlled vehicle parts are not restrictive, and may vary, for example, according to the difference in model and/or function of a vehicle. The interactive elements may be, for example, virtual keys with various schematic icons, for example, interactive elements 101, 102, 103, 104, and 105 as shown in Fig. 2. The control UI 100 may specifically occupy the entire display area of a display screen substantially.

With continued reference to Figs. 1 and 2, the processor 20 may be used to control the display on the user interface (UI) of the display 10, and the processor 20 may control, in response to receiving an indication message indicative of entering into the control UI 100, at least some of the plurality of interactive elements to be arranged and displayed by categories on the control UI 100. That is to say, the plurality of interactive elements are presented by categories on the control UI 100, which facilitates a user's cognition, and reduces the user's memory about the interactive elements themselves and paths to enter.

As shown in Fig. 2, in an embodiment, the processor 20 may control, in response to receiving an indication message indicative of entering into the control UI 100, at least some of the plurality of interactive elements to be arranged and displayed by categories of physical attributes of their correspondingly controlled vehicle parts on the control UI 100.

For example, m interactive elements 1011, 1012 ... 101m are correspondingly used to control vehicle parts in such a category of physical attributes "window", and therefore, they are classified to a corresponding region 1101 of the category "window" for arrangement and displaying in an order including, but not limited to, from left to right, for example; m interactive elements 1021, 1022... 102m are correspondingly used to control vehicle parts in such a category of physical attributes "lock", and therefore, they are classified to a corresponding region 1102 of the category "lock" for arrangement and displaying in an order including, but not limited to, from left to right, for example; and m interactive elements 1031, 1032...103m are correspondingly used to control vehicle parts in such a category of physical attributes "lamp", and therefore, they are classified to a corresponding region 1103 of the category "lamp" for arrangement and displaying in an order including, but not limited to, from left to right, for example.

It should be noted that the specific value of m is not restrictive, for example, 1 ≤ m ≤ 6. The categories of classification of the physical attributes of vehicle parts are also not limited to "window", "lock" and "lamp" in the examples above, and may also include, for example, "seat" and the like. Each interactive element may contain a corresponding schematic diagram to facilitate a user's recognition.

In yet another embodiment, the processor 20 may control, in response to receiving an indication message indicative of entering into the control UI 100, at least some of the plurality of interactive elements to be arranged and displayed by categories of effects of their correspondingly controlled vehicle parts on the control UI 100.

For example, m interactive elements 1041, 1042...104m are correspondingly used to control vehicle parts in such a category of effects "comfort", and therefore, they are classified to a corresponding region 1104 of the category "comfort" for arrangement and displaying in an order including, but not limited to, from left to right, for example; and m interactive elements 1051, 1052 ... 105m are correspondingly used to control vehicle parts in such a category of effects "driving", and therefore, they are classified to a corresponding region 1105 of the category "driving" for arrangement and displaying in an order including, but not limited to, from left to right, for example.

It should be noted that the specific value of m is not restrictive, for example, 1 ≤ m ≤ 6. The categories of classification of the effects of vehicle parts are also not limited to "comfort" and "driving" in the examples above, and may also include, for example, "safety" and the like. Each interactive element may contain a corresponding schematic diagram to facilitate a user's recognition.

The above arrangement and displaying by categories can quickly guide a user to enter into the operation of a certain interactive element, which greatly reduces memory costs of the interactive element and its path, is very simple and convenient in operation, and greatly improves the efficiency and convenience of the user operating and controlling a certain part.

In an embodiment, the "name" of the category or other interactive elements, for example, interactive element "more" as shown in Fig. 2, may also be displayed in the corresponding region 110 of each category. When the user clicks on the interactive element "more", a corresponding UI of the category can be displayed, and all interactive elements in the category are displayed on the UI for selection by the user to perform an interactive operation.

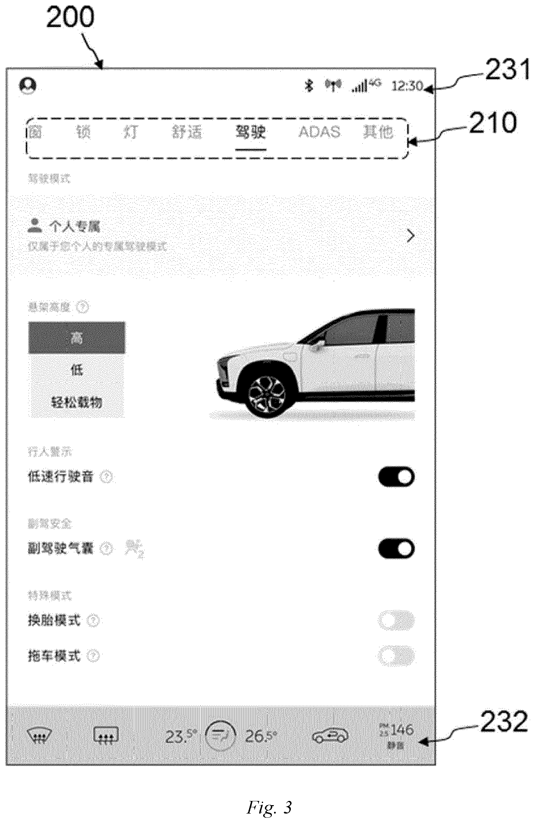

In an embodiment, if the user selects and clicks on an interactive element according to his/her control requirements for a part, the processor 20 may also control, in response to an interactive operation instruction (e.g., selecting and clicking on a certain interactive element) for a corresponding interactive element, the display 10 to display a user setup interface 200 for one or more vehicle parts correspondingly controlled by the interactive element (as shown in Fig. 3). In an embodiment, interactive elements 210 (e.g., interactive elements corresponding to "window", "lock", "comfort", etc.) respectively corresponding to the plurality of categories classified above are also presented on the user setup interface 200, and the processor 20 is configured to control, in response to an interactive operation instruction for corresponding interactive elements in a certain category, the display 10 to display a UI for the category, and all interactive elements in the category will be displayed on the UI for selection by the user to perform an interactive operation. In this way, if the user needs to enter, on the similar user setup interface 200 as shown in Fig. 3, into a corresponding UI for other categories, the operation is convenient and quick, and the operation path is short.

Specifically, the user setup interface 200 may further include a status bar region 231, and also even an information bar region 132. The content displayed in the status bar region 131 or the information bar region 232 is not restrictive, and may be defined by a user. The content displayed in the status bar region 131 or the information bar region 232 is relatively independent of the content displayed on the user setup interface 200, that is to say, changes in the content displayed on the setup interface 200 do not affect the content displayed in the status bar region 231 or the information bar region 232. The control UI 100 may also include the similar status bar region 231 and/or information bar region 232 as shown in Fig. 3.

It should be noted that the user setup interface is not restrictive in terms of specific form, etc., and corresponding user setup interfaces for different interactive elements may be in different forms. According to requirements, user setup interfaces of different styles may also be designed in a unified form.

It should be noted that the number of categories displayed on the control UI 100 above is not restrictive. For example, only the regions 1101, 1102 and 1103 classified by categories of physical attributes may be displayed, or only the regions 1104 and 1105 classified by effects may be displayed.

In yet another embodiment, the displayed content on the control UI 100 may be personalized according to the user's usage habits. For example, the processor 20 may also define, in response to a category customization instruction from a user, categories that need to be displayed on the control UI 100, for example, define, according to the category customization instruction from the user, the classification manner and the name of each category, the category to be displayed and a display mode (for example, the order of categories), etc. For another example, the processor 20 may also define, according to frequencies of use of the interactive elements by the user, correspondingly arranged and displayed interactive elements in each category; taking the arrangement of a plurality of interactive elements in a certain category from left to right as an example, the higher the frequencies of use of the interactive elements by the user are, the closer to the left or the center (depending on the user's usage habits) the interactive elements may be arranged, such that the user can more conveniently operate the interactive elements with a higher frequency of use, which makes the interactive operation very time-saving and convenient where most operations are required. Of course, the order of arrangement (for example, from upper up to down) of the plurality of regions 110 (e.g., regions 1101, 1102, 1103, 1104, and 1105) may also be personalized according to the user's preferences or habits. The specific manner of definition is not limited to the examples above.

In an embodiment, the onboard terminal device 1000 as an apparatus for controlling vehicle parts may also have many other functions, for example, navigation, music playback, telephoning, etc., and in the case of daily driving, the control of the vehicle parts by a user only occurs accidentally. Therefore, in an embodiment, a default UI is displayed when the onboard terminal device 1000 is in a general state, and the processor 20 may control the display of the default UI on the display 10, and the processor 20 also controls, in response to an indication message indicative of entering into the control UI 100 by means of a sliding operation on the default UI, the display 10 to switch the display of the control UI 100. In this way, the user can enter into the control UI 100 very conveniently, and the operation paths of control over vehicle parts are reduced. For example, in a general state where the default UI is displayed, the user can enter into the control UI 100 as shown in Fig. 2 by means of an operation of sliding from left to right on the default UI.

It should be noted that the manner of operation corresponding to the indication message indicative of entering into the control UI 100 is not limited to the example above, which may be, for example, an operation of sliding from up to down, or an operation of clicking of a button on the default UI, or the like.

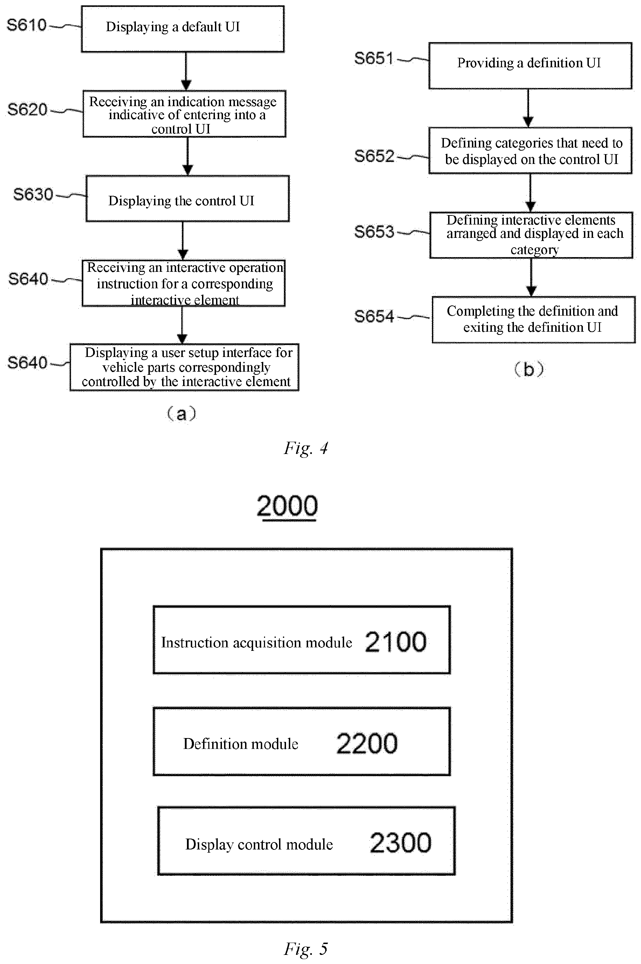

Fig. 4 shows a flowchart of a method for controlling vehicle parts according to an embodiment of the invention, in which Fig. 4(a) is a method for controlling vehicle parts, and Fig. 4(b) is a definition method process in the method for controlling vehicle parts.

First, the definition method process of Fig. 4(b) is illustrated.

In step S651, a definition UI is provided, wherein the definition UI is used to form a display region for containers and alternative application components.

In step S652, in response to an instruction for defining the control UI 100, categories that need to be displayed on the control UI 100 are defined, for example, categories "window", "lock", "seat", "comfort", etc. In this step, the manner of arrangement (for example, from up to down), the order of arrangement, and the like of the regions corresponding to the categories may also be possible.

In step S653, in response to an instruction for defining the control UI 100, interactive elements arranged and displayed in each category are defined according to frequencies of use of the interactive elements by the user, and the order of the interactive elements correspondingly arranged and displayed in each category is also defined according to the frequencies of use of the interactive elements by the user. Illustratively, a certain category may contain more than m interactive elements beyond those that cannot be displayed in the region 110 shown in Fig. 2, the interactive elements in this category are sequentially arranged from high to low frequencies of use by a user, and the m interactive elements with a relatively high frequency of use are defined in the corresponding region 110 for display and presentation from left to right.

It will be understood that for step S653, the process of step S653 may be repeated for different categories until step S653 is completed for all categories.

In step S654, the definition is completed and the definition UI is exited.

Further, the method for controlling vehicle parts in the embodiment shown in Fig. 4(a) is illustrated.

In step S610, a default UI is displayed. The default UI is a user interface of the onboard terminal device 1000 when in a general state, and none of a specific interface form, displayed content, etc. thereof is restrictive. In most cases, the onboard terminal device 1000 will be in a state where the default UI is displayed.

Further, in step S620, an indication message indicative of entering into a control UI 100 is received. Illustratively, an indication message indicative of entering into the control UI 100 by means of a sliding operation (for example, an operation of sliding from left to right) on the default UI is received, in such a way that a user can enter into the control UI 100 very conveniently and the operation paths of control over vehicle parts are reduced.

Further, in step S630, the control UI 100 is displayed, that is, the control UI 100 is displayed in response to the indication message, wherein at least some of a plurality of interactive elements for controlling various vehicle parts on the control UI 100 are arranged and displayed by categories. The interactive elements arranged and displayed by categories on the control UI 100 are predefined interactive elements, may be the interactive elements defined in the definition process as shown in Fig. 4(b), and may be interactive elements used highly frequently by the user.

In an embodiment, step S640 is further included, in which an interactive operation instruction for a corresponding interactive element is received, for example, an operation instruction for a certain interactive element under a corresponding category of the region 1105 that the user clicks on is received.

In step S650, in response to the interactive operation instruction, the user setup interface 200 for one or more vehicle parts correspondingly controlled by the interactive element is displayed (see Fig. 3). The specific form of the corresponding user setup interface 200 on which each interactive element is operated for entering into is not restrictive. In an embodiment, interactive elements 210 (e.g., interactive elements corresponding to categories "window", "lock", "comfort", etc.) respectively corresponding to the plurality of categories classified above are also presented on the user setup interface 200, which facilitates the control, in response to an interactive operation instruction for corresponding interactive elements in a certain category (an interactive element corresponding to the category "window"), of the display 10 to display a UI for the category, and all interactive elements in the category are displayed on the UI for selection by the user to perform an interactive operation.

On the displayed user setup interface, the user may complete various setup operations to specifically control vehicle parts, wherein the specific manner of setup operations is not restrictive.

It should be noted that steps S640 and S650 above can be repeated to complete the process of control over the same vehicle part or different vehicle parts.

It can be seen that in the process of controlling a certain vehicle part, the user goes through a short operation path to the specific user setup interface for the corresponding vehicle part and performs operations very conveniently, without the need to memorize the operation path too much, which greatly improves the user experience.

Fig. 5 shows a schematic diagram of modules in an onboard terminal device according to another embodiment of the invention. As shown in Fig. 5, an onboard terminal device 2000 includes an instruction acquisition module 2100, which is configured to acquire various instructions input by a user, for example, including, but not limited to, the above-mentioned category customization instruction, instruction for defining the control UI, indication message indicative of entering into the control UI, interactive operation instruction for an interactive element, etc. Specifically, the corresponding instruction can be acquired by receiving the user's interactive operation inputs for various interactive elements.

The onboard terminal device 2000 optionally comprises a definition module 2200, which defines, in response to a category customization instruction from a user, categories that need to be displayed on the control UI and display manner therefor, and particularly defines, according to frequencies of use of the interactive elements by the user, correspondingly arranged and displayed interactive elements in each category. The definition module 2200 can be used to complete steps S651 to S654 above.

The onboard terminal device 2000 further comprises a display control module 2300. The display control module 2300 may control the display of the UI on a display, particularly the display of the control user interface in response to the indication message indicative of entering into the control UI 100, wherein at least some of the plurality of interactive elements for controlling various vehicle parts on the control UI 100 are arranged and displayed by categories. In yet another embodiment, the display control module 2300 further displays, in response to an interactive operation instruction for a corresponding interactive element, a user setup interface for one or more vehicle parts correspondingly controlled by the interactive element. Therefore, the display control module 2300 can be used to complete steps S630 and S640 of the method shown in Fig. 4(a).

It should be noted that in some alternative implementations, the functions/operations shown in the blocks may occur in an order different from that shown in the flowchart. For example, two blocks shown in sequence may actually be executed substantially simultaneously or may sometimes be executed in a reverse order, which depends on the functions/operations involved. Although a specific order of steps is shown, disclosed, and required, it should be understood that the steps may be implemented, separated, or combined in any order, unless otherwise indicated, and will still benefit from this disclosure.

This description uses instances to disclose the invention, including the best mode, and also to enable any person skilled in the art to practice the invention, including making and using any apparatus or system and performing any of the incorporated methods. The scope of protection of the invention is defined by the claims.

## Claims

1. An apparatus (1000) for controlling vehicle parts comprising:
a display (10) configured to provide a control user interface (100), wherein the control user interface (100) displays a plurality of interactive elements (101, 102, 103, 104, 105) for controlling various vehicle parts; and
a processor (20) configured to control, in response to receiving an indication message indicative of entering into the control user interface (100), at least some of the plurality of interactive elements (101, 102, 103, 104, 105) to be arranged and displayed on the control user interface (100),
**characterized in that**
the processor (20) is configured to control, in response to receiving the indication message indicative of entering into the control user interface (100), at least some of the plurality of interactive elements (101, 102, 103, 104, 105) to be arranged and displayed by categories of physical attributes of their correspondingly controlled vehicle parts on the control user interface (100), and
the processor (20) is further configured to control the display of a default user interface on the display, and control, in response to the indication message indicative of entering into the control user interface (100) by means of a sliding operation on the default user interface, the display to switch to the display of the control user interface (100).

2. The apparatus (1000) according to claim 1, **characterized in that** the processor (20) is configured to control, in response to receiving the indication message indicative of entering into the control user interface (100), at least some of the plurality of interactive elements (101, 102, 103, 104, 105) to be arranged and displayed by categories of effects of their correspondingly controlled vehicle parts on the control user interface (100).

3. The apparatus (1000) according to claim 1, **characterized in that** the processor (20) is further configured to define, in response to a category customization instruction from a user, categories that need to be displayed on the control user interface (100) and display manners therefor.

4. The apparatus (1000) according to claim 1 or 3, **characterized in that** the processor (20) is further configured to define, according to frequencies of use of the interactive elements (101, 102, 103, 104, 105) by the user, correspondingly arranged and displayed interactive elements (101, 102, 103, 104, 105) in each category.

5. The apparatus (1000) according to claim 1, **characterized in that** the processor (20) is further configured to control, in response to an interactive operation instruction for a corresponding interactive element (101; 102; 103; 104; 105), the display to display a user setup interface (200) for one or more vehicle parts correspondingly controlled by the interactive element (101; 102; 103; 104; 105).

6. A method for controlling vehicle parts, **characterized by** comprising:
receiving (S620) an indication message indicative of entering into a control user interface (100); and
displaying (S630) the control user interface (100) in response to the indication message, wherein at least some of a plurality of interactive elements (101, 102, 103, 104, 105) for controlling various vehicle parts on the control user interface (100) are arranged and displayed,
**characterized in that**
in the step of displaying (S630) the control user interface (100), at least some of the plurality of interactive elements (101, 102, 103, 104, 105) for controlling various vehicle parts on the control user interface (100) are arranged and displayed by categories of physical attributes of their correspondingly controlled vehicle parts, and
the method further comprises:
displaying a default user interface;
receiving the indication message indicative of a sliding operation on the default user interface in said step of receiving (S620) an indication message indicative of entering into a control user interface (100); and
switching the display from the default user interface to the control user interface (100) in said step of displaying (S630) the control user interface (100).

7. The method according to claim 6, **characterized in that** in the step of displaying (S630) the control user interface (100), at least some of the plurality of interactive elements (101, 102, 103, 104, 105) for controlling various vehicle parts on the control user interface (100) are arranged and displayed by categories of effects of their correspondingly controlled vehicle parts.

8. The method according to claim 6, **characterized by** further comprising:
a definition step: defining, in response to a category customization instruction from a user, categories that need to be displayed on the control user interface (100) and display manners therefor.

9. The method according to claim 6 or 8, **characterized by** further comprising:
a definition step: defining, according to frequencies of use of the interactive elements (101, 102, 103, 104, 105) by the user, correspondingly arranged and displayed interactive elements in each category.

10. The method according to claim 6, **characterized by** further comprising the steps of:
receiving (S640) an interactive operation instruction for a corresponding interactive element (101; 102; 103; 104; 105); and
displaying (S650), in response to the interactive operation instruction, a user setup interface (200) for one or more vehicle parts correspondingly controlled by the interactive element (101; 102; 103; 104; 105).

## Patentansprüche

1. Vorrichtung (1000) zum Steuern von Fahrzeugteilen, die Folgendes umfasst:
eine Anzeige (10), die dazu ausgelegt ist, eine Steuerungsbenutzerschnittstelle (100) bereitzustellen, wobei die Steuerungsbenutzerschnittstelle (100) eine Vielzahl von interaktiven Elementen (101, 102, 103, 104, 105) zum Steuern von verschiedenen Fahrzeugteilen anzeigt; und
einen Prozessor (20), der dazu ausgelegt ist, in Reaktion auf das Empfangen einer Anzeigenachricht, die das Aufrufen der Steuerungsbenutzerschnittstelle (100) anzeigt, mindestens einige der Vielzahl von interaktiven Elementen (101, 102, 103, 104, 105) derart zu steuern, dass sie auf der Steuerungsbenutzerschnittstelle (100) angeordnet und angezeigt werden,
**dadurch gekennzeichnet, dass**
der Prozessor (20) dazu ausgelegt ist, in Reaktion auf das Empfangen der Anzeigenachricht, die das Aufrufen der Steuerungsbenutzerschnittstelle (100) anzeigt, mindestens einige der Vielzahl von interaktiven Elementen (101, 102, 103, 104, 105) derart zu steuern, dass sie nach Kategorien von physischen Attributen von deren entsprechend gesteuerten Fahrzeugteilen auf der Steuerungsbenutzerschnittstelle (100) angeordnet und angezeigt werden, und
der Prozessor (20) ferner dazu ausgelegt ist, die Anzeige einer Standardbenutzerschnittstelle auf der Anzeige zu steuern und in Reaktion auf die Anzeigenachricht, die das Aufrufen der Steuerungsbenutzerschnittstelle (100) mittels einer Schiebeoperation auf der Standardbenutzerschnittstelle anzeigt, die Anzeige derart zu steuern, dass sie zur Anzeige der Steuerungsbenutzerschnittstelle (100) umschaltet.

2. Vorrichtung (1000) nach Anspruch 1, **dadurch gekennzeichnet, dass** der Prozessor (20) dazu ausgelegt ist, in Reaktion auf das Empfangen der Anzeigenachricht, die das Aufrufen der Steuerungsbenutzerschnittstelle (100) anzeigt, mindestens einige der Vielzahl von interaktiven Elementen (101, 102, 103, 104, 105) derart zu steuern, dass sie nach Kategorien von Wirkungen von deren entsprechend gesteuerten Fahrzeugteilen auf der Steuerungsbenutzerschnittstelle (100) angeordnet und angezeigt werden.

3. Vorrichtung (1000) nach Anspruch 1, **dadurch gekennzeichnet, dass** der Prozessor (20) ferner dazu ausgelegt ist, in Reaktion auf eine Kategorieanpassungsanweisung von einem Benutzer Kategorien zu definieren, die auf der Steuerungsbenutzerschnittstelle (100) angezeigt werden müssen, und Weisen dafür anzuzeigen.

4. Vorrichtung (1000) nach Anspruch 1 oder 3, **dadurch gekennzeichnet, dass** der Prozessor (20) ferner dazu ausgelegt ist, gemäß Häufigkeiten der Verwendung der interaktiven Elemente (101, 102, 103, 104, 105) durch den Benutzer entsprechend angeordnete und angezeigte interaktive Elemente (101, 102, 103, 104, 105) in jeder Kategorie zu definieren.

5. Vorrichtung (1000) nach Anspruch 1, **dadurch gekennzeichnet, dass** der Prozessor (20) ferner dazu ausgelegt ist, in Reaktion auf eine Anweisung für eine interaktive Operation für ein entsprechendes interaktives Element (101; 102; 103; 104; 105) die Anzeige derart zu steuern, dass für ein oder mehrere Fahrzeugteile, die entsprechend durch das interaktive Element (101; 102; 103; 104; 105) gesteuert werden, eine Benutzereinrichtungsschnittstelle (200) angezeigt wird.

6. Verfahren zum Steuern von Fahrzeugteilen, **dadurch gekennzeichnet, dass** es Folgendes umfasst:
Empfangen (S620) einer Anzeigenachricht, die das Aufrufen einer Steuerungsbenutzerschnittstelle (100) anzeigt; und
Anzeigen (S630) der Steuerungsbenutzerschnittstelle (100) in Reaktion auf die Anzeigenachricht, wobei mindestens einige einer Vielzahl von interaktiven Elementen (101, 102, 103, 104, 105) zum Steuern von verschiedenen Fahrzeugteilen auf der Steuerungsbenutzerschnittstelle (100) angeordnet und angezeigt werden,
**dadurch gekennzeichnet, dass**
beim Schritt des Anzeigens (S630) der Steuerungsbenutzerschnittstelle (100) mindestens einige der Vielzahl von interaktiven Elementen (101, 102, 103, 104, 105) zum Steuern von verschiedenen Fahrzeugteilen nach Kategorien von physischen Attributen von deren entsprechend gesteuerten Fahrzeugteilen auf der Steuerungsbenutzerschnittstelle (100) angeordnet und angezeigt werden, und
das Verfahren ferner Folgendes umfasst:
Anzeigen einer Standardbenutzerschnittstelle;
beim Schritt des Empfangens (S620) einer Anzeigenachricht, die das Aufrufen einer Steuerungsbenutzerschnittstelle (100) anzeigt, Empfangen der Anzeigenachricht, die eine Schiebeoperation auf der Standardbenutzerschnittstelle anzeigt; und
beim Schritt des Anzeigens (S630) der Steuerungsbenutzerschnittstelle (100) Umschalten der Anzeige von der Standardbenutzerschnittstelle zur Steuerungsbenutzerschnittstelle (100).

7. Verfahren nach Anspruch 6, **dadurch gekennzeichnet, dass** beim Schritt des Anzeigens (S630) der Steuerungsbenutzerschnittstelle (100) mindestens einige der Vielzahl von interaktiven Elementen (101, 102, 103, 104, 105) zum Steuern von verschiedenen Fahrzeugteilen nach Kategorien von Wirkungen von deren entsprechend gesteuerten Fahrzeugteilen auf der Steuerungsbenutzerschnittstelle (100) angeordnet und angezeigt werden.

8. Verfahren nach Anspruch 6, **dadurch gekennzeichnet, dass** es ferner Folgendes umfasst:
einen Definitionsschritt: Definieren von Kategorien, die auf der Steuerungsbenutzerschnittstelle (100) angezeigt werden müssen, in Reaktion auf eine Kategorieanpassungsanweisung von einem Benutzer und Anzeigen von Weisen dafür.

9. Verfahren nach Anspruch 6 oder 8, **dadurch gekennzeichnet, dass** es ferner Folgendes umfasst:
einen Definitionsschritt: Definieren von entsprechend angeordneten und angezeigten interaktiven Elementen in jeder Kategorie gemäß Häufigkeiten der Verwendung der interaktiven Elemente (101, 102, 103, 104, 105) durch den Benutzer.

10. Verfahren nach Anspruch 6, **dadurch gekennzeichnet, dass** es ferner die folgenden Schritte umfasst:
Empfangen (S640) einer Anweisung zur interaktiven Operation für ein entsprechendes interaktives Element (101; 102; 103; 104; 105) und
Anzeigen (S650) einer Benutzereinrichtungsschnittstelle (200) für ein oder mehrere Fahrzeugteile, die entsprechend vom interaktiven Element (101; 102; 103; 104; 105) gesteuert werden, in Reaktion auf die Anweisung zur interaktiven Operation.

## Revendications

1. Appareil (1000) pour commander des parties de véhicule, comprenant :
un dispositif d'affichage (10) configuré pour fournir une interface utilisateur de commande (100), dans lequel l'interface utilisateur de commande (100) affiche une pluralité d'éléments interactifs (101, 102, 103, 104, 105) pour commander diverses parties de véhicule ; et
un processeur (20) configuré pour commander, en réponse à la réception d'un message d'indication indicatif de l'entrée dans l'interface utilisateur de commande (100), au moins certains de la pluralité d'éléments interactifs (101, 102, 103, 104, 105) destinés à être agencés et affichés sur l'interface utilisateur de commande (100),
**caractérisé en ce que**
le processeur (20) est configuré pour commander, en réponse à la réception du message d'indication indicatif de l'entrée dans l'interface utilisateur de commande (100), au moins certains de la pluralité d'éléments interactifs (101, 102, 103, 104, 105) destinés à être agencés et affichés, par catégories d'attributs physiques de leurs parties de véhicule commandées en correspondance, sur l'interface utilisateur de commande (100), et
le processeur (20) est en outre configuré pour commander le dispositif d'affichage d'une interface utilisateur par défaut sur le dispositif d'affichage, et commander, en réponse au message d'indication indicatif de l'entrée dans l'interface utilisateur de commande (100), au moyen d'une opération de glisser sur l'interface utilisateur par défaut, le dispositif d'affichage pour permuter à l'affichage de l'interface utilisateur de commande (100).

2. Appareil (1000) selon la revendication 1, **caractérisé en ce que** le processeur (20) est configuré pour commander, en réponse à la réception du message d'indication indicatif de l'entrée dans l'interface utilisateur de commande (100), au moins certains de la pluralité d'éléments interactifs (101, 102, 103, 104, 105) destinés à être agencés et affichés, par catégories d'effets de leurs parties de véhicule commandées en correspondance, sur l'interface utilisateur de commande (100).

3. Appareil (1000) selon la revendication 1, **caractérisé en ce que** le processeur (20) est en outre configuré pour définir, en réponse à une instruction de personnalisation de catégorie provenant d'un utilisateur, des catégories qui doivent être affichées sur l'interface utilisateur de commande (100) et des manières d'affichage pour celles-ci.

4. Appareil (1000) selon la revendication 1 ou 3, **caractérisé en ce que** le processeur (20) est en outre configuré pour définir, selon des fréquences d'utilisation des éléments interactifs (101, 102, 103, 104, 105) par l'utilisateur, des éléments interactifs agencés et affichés en correspondance (101, 102, 103, 104, 105) dans chaque catégorie.

5. Appareil (1000) selon la revendication 1, **caractérisé en ce que** le processeur (20) est en outre configuré pour commander, en réponse à une instruction d'opération interactive pour un élément interactif correspondant (101 ; 102 ; 103 ; 104 ; 105), le dispositif d'affichage pour afficher une interface de réglage utilisateur (200) pour une ou plusieurs parties de véhicule commandées en correspondance par l'élément interactif (101 ; 102 ; 103 ; 104 ; 105).

6. Procédé pour commander des parties de véhicule, **caractérisé en ce qu'**il comprend :
la réception (S620) d'un message d'indication indicatif de l'entrée dans une interface utilisateur de commande (100) ; et
l'affichage (S630) de l'interface utilisateur de commande (100) en réponse au message d'indication, dans lequel au moins certains d'une pluralité d'éléments interactifs (101, 102, 103, 104, 105) pour commander diverses parties de véhicule sur l'interface utilisateur de commande (100) sont agencés et affichés,
**caractérisé en ce que**
dans l'étape de l'affichage (S630) de l'interface utilisateur de commande (100), au moins certains de la pluralité d'éléments interactifs (101, 102, 103, 104, 105) pour commander diverses parties de véhicule sur l'interface utilisateur de commande (100) sont agencés et affichés par catégories d'attributs physiques de leurs parties de véhicule commandées en correspondance, et
le procédé comprend en outre :
l'affichage d'une interface utilisateur par défaut ;
la réception du message d'indication indicatif d'une opération de glisser sur l'interface utilisateur par défaut dans ladite étape de la réception (S620) d'un message d'indication indicatif de l'entrée dans une interface utilisateur de commande (100) ; et
la permutation du dispositif d'affichage depuis l'interface utilisateur par défaut à l'interface utilisateur de commande (100) dans ladite étape de l'affichage (S630) de l'interface utilisateur de commande (100).

7. Procédé selon la revendication 6, **caractérisé en ce que**, dans l'étape de l'affichage (S630) de l'interface utilisateur de commande (100), au moins certains de la pluralité d'éléments interactifs (101, 102, 103, 104, 105) pour commander diverses parties de véhicule sur l'interface utilisateur de commande (100) sont agencés et affichés par catégories d'effets de leurs parties de véhicule commandées en correspondance.

8. Procédé selon la revendication 6, **caractérisé en ce qu'**il comprend en outre :
une étape de définition : la définition, en réponse à une instruction de personnalisation de catégorie provenant d'un utilisateur, de catégories qui doivent être affichées sur l'interface utilisateur de commande (100) et de manières d'affichage pour celles-ci .

9. Procédé selon la revendication 6 ou 8, **caractérisé en ce qu'**il comprend en outre :
une étape de définition : la définition, selon des fréquences d'utilisation des éléments interactifs (101, 102, 103, 104, 105) par l'utilisateur, des éléments interactifs agencés et affichés en correspondance dans chaque catégorie.

10. Procédé selon la revendication 6, **caractérisé en ce qu'**il comprend en outre les étapes de :
la réception (S640) d'une instruction d'opération interactive pour un élément interactif correspondant (101 ; 102 ; 103 ; 104 ; 105) ; et
l'affichage (S650), en réponse à l'instruction d'opération interactive, d'une interface de réglage utilisateur (200) pour une ou plusieurs parties de véhicule commandées en correspondance par l'élément interactif (101 ; 102 ; 103 ; 104 ; 105).
